# EUROPÄISCHE PATENTSCHRIFT

(11) **EP 3 203 591 B1**
(45) Veröffentlichungstag und Bekanntmachung des Hinweises auf die Patenterteilung: **28.10.2020**
(21) Anmeldenummer: 16000297.8
(22) Anmeldetag: 05.02.2016
(51) Int. Cl.: H01R 13/627, H01R 13/639, H01R 24/40, H01R 13/6582

(54) **STECKVERBINDER**
CONNECTOR
CONNECTEUR A FICHES

(43) Veröffentlichungstag der Anmeldung: 09.08.2017
(73) Patentinhaber: Rosenberger Hochfrequenztechnik GmbH & Co. KG, 83413 Fridolfing (DE)
(72) Erfinder: Barbet, Anne, 84489 Burghausen (DE); Krautenbacher, Josef, 83413 Fridolfing (DE); Stadler, Tobias, 83413 Fridolfing (DE); Wimmer, Martin, 83349 Palling (DE)
(74) Vertreter: Zeitler Volpert Kandlbinder Patent- und Rechtsanwälte Partnerschaft mbB

(56) Entgegenhaltungen:
- EP-A1- 2 978 079
- DE-A1-102012 100 615

## Beschreibung

Die Erfindung betrifft einen Steckverbinder gemäß dem Oberbegriff des Patentanspruchs 1. Ferner betrifft die Erfindung einen Satelliten mit einem derartigen Steckverbinder.

Steckverbinder dienen zum Trennen und Verbinden von Bauteilen, wie Platinen, und/oder Leitungen für elektrische oder optische Signale, wie z.B. elektrischen Strom, oder optische Strahlung, wie z.B. Licht oder Laserlicht.

Steckverbinder weisen zumindest zwei Teile auf, einen männlichen Teil und einen weiblichen Teil.

Der männliche Teil einer Steckverbindung weist nach außen weisende Kontaktzungen auf, während der weibliche Teil nach innen weisende Kontaktöffnungen aufweist. Es gibt aber auch Steckverbinder mit Steckelementen beiderlei Geschlechts.

Der männliche Teil wird auch als Stecker bezeichnet, wenn er am Ende eines Kabels angebracht ist, oder als Adapter.

Der weibliche Teil wird auch als Kupplung bezeichnet, wenn er am Ende eines Kabels angebracht ist, oder als Buchse, wenn er fest in ein Gerätegehäuse eingebaut ist.

Für elektrische Hochfrequenz (HF)-Signale mit einer Frequenz von bis zu 40 GHz werden z.B. sogenannte SMP-Steckverbinder verwendet, die, wie der Name bereits andeutet, gesteckt werden. Derartige Steckverbinder gewährleisten eine Verbindung bis zu einer maximalen Zugkraft von etwa 22 bis etwa 68 N. Im Fall von höheren Zugkräften löst sich die Verbindung.

Um ein ungewolltes Lösen bei höheren Zugkräften zu verhindern, ist aus der DE 44 39 852 A1 ein Koaxialsteckverbinder mit einer Sicherungshülse bekannt, die zwischen zwei Endpositionen in axialer Richtung des Steckverbinders verlagerbar ist. Durch Verlagern der Sicherungshülse in Richtung zum freien Ende des Steckers hin können Fixierelemente radial einwärts bewegt und fixiert werden, wobei sie in dieser fixierten Position dann in Eingriff stehend mit Gegenfixierelementen den Stecker in der Buchse festhalten. Durch eine Bewegung der Sicherungshülse in die entgegengesetzte Richtung, d.h. vom freien Ende weg, kann der Eingriff der Fixierelemente mit den Gegenfixierelementen gelöst werden, so dass der Stecker von der Buchse mit geringem Kraftaufwand getrennt werden kann.

Jedoch erfordert der aus der DE 44 39 852 A1 bekannte Koaxialsteckverbinder, dass die Sicherungshülse zum Herbeiführen einer Steckverbindung sich nicht an dem freien Ende befindet. D.h. zum Bilden einer Verbindung muss in einem ersten Schritt die Sicherungshülse entgegen der Fügebewegung zum Verbinden des Steckers mit der Buchse vom freien Ende wegbewegt und dann in einem zweiten Schritt in Richtung der Fügebewegung zum freien Ende hin bewegt werden. Dies erschwert durch seinen unnatürlichen Bewegungsablauf das Bilden einer Verbindung mit einem derartigen Steckverbinder.

Die EP 2 978 079 A1 offenbart eine Kupplung umfassend ein buchsenseitiges Gehäuse und ein stiftseitiges Gehäuse zur Vermittlung eines Kontakts zwischen einem Buchsenelement und einem Stiftelement. Dabei erstrecken sich die Gehäuse im Wesentlichen entlang einer Mittelachse und sind über eine Steckbewegung miteinander verbindbar. Es ist eine selbstrastende Verbindung zur Feststellung der Gehäuse aneinander vorgesehen, welche ein erstes und ein zweites Rastelement umfasst. Dabei ist das erste Rastelement auf einem radial bezüglich der Mittelachse elastisch auslenkbaren Fingerelement angebracht.

Der Erfindung liegt die Aufgabe zugrunde, einen Steckverbinder bereitzustellen, bei dem die Verbindung gegen erhöhte Zugkräfte zuverlässig gesichert ist und der zugleich leichter zu handhaben ist.

Diese Aufgabe wird erfindungsgemäß durch einen Steckverbinder nach Patentanspruch 1 gelöst. Vorteilhafte Ausgestaltungen der Erfindung sind in den weiteren Patentansprüchen beschrieben.

Dazu ist bei einem Steckverbinder erfindungsgemäß vorgesehen, dass in der Verriegelungsposition das Sicherungselement dem Fixierelement eine Bewegung in radialer Richtung nach innen erlaubend ausgebildet ist, um eine Fügebewegung in axialer Richtung zum Verbinden des ersten Verbinders mit dem zweiten Verbinder zu ermöglichen.

Dabei kann es sich bei dem ersten Verbinder um einen Stecker und bei dem zweiten Verbinder um eine Buchse handeln, oder der erste Verbinder ist als Buchse und der zweite Verbinder ist als Stecker ausgebildet.

Dies hat den Vorteil, dass der erste Verbinder mit dem zweiten Verbinder auch in der Verriegelungsposition durch die Fügebewegung verbunden werden kann. Somit ist es nicht erforderlich, vor dem Durchführen der Fügebewegung zuerst das Sicherungselement in eine Richtung entgegen der Richtung der Fügebewegung zu bewegen, sondern der erste Verbinder kann sofort in einem Schritt mit dem zweiten Verbinder verbunden werden. Dies vereinfacht das Herstellen einer Verbindung mit dem Steckverbinder erheblich, da bei dem Fügevorgang das Sicherungselement als Griffelement dienen kann und so eine Einhandmontage ermöglicht ist. Zugleich kann der eine Lösefunktion aufweisende Steckverbinder Fixierelemente aufweisen, die eine Verbindung des ersten Verbinders mit dem zweiten Verbinder auch beim Auftreten von hohen Zugkräften, z.B. oberhalb von 22 bis 68 N, aufrechterhalten, da durch das eine Entriegelungswirkung aufweisende Sicherungselement die Haltekraft zwischen dem ersten Verbinder und dem zweiten Verbinder bei Bedarf reduziert werden kann, um sie voneinander zu trennen.

Der Steckverbinder kann zum Übertragen von Elektrizität, wie elektrischer Signale oder Versorgungsspannungen, ausgebildet sein. Alternativ kann der Steckverbinder auch zum Übertragen von optischen Signalen, wie z.B. Licht- oder Laserlichtsignalen, ausgebildet sein und dem Verbinden von z.B. zwei Lichtwellenleitern dienen. Der Steckverbinder kann als Koaxialsteckverbinder mit einem Außenkontakt und einen Innenkontakt ausgebildet sein. Alternativ kann der Steckverbinder aber auch andere Formen bzw. Steckkontaktanordnungen aufweisen, wie z.B. mit einer Mehrzahl von Kontakten, die in einer Reihe oder rechteckförmig angeordnet sind, wobei der Außenleiter belegt oder unbelegt sein kann. Des Weiteren kann der Steckverbinder als SMP-Steckverbinder zum Übertragen von HF-Signalen mit Frequenzen von bis zu 40 GHz ausgebildet sein.

Ferner kann sich die Verriegelungsposition am freien bzw. dem zweiten Verbinder zugewandten Ende und die Entriegelungsposition an dem dem zweiten Verbinder abgewandten Ende des ersten Verbinders befinden. Das Sicherungselement kann direkt oder indirekt, d.h. ohne Zwischenschaltung von Bauelementen oder mit Zwischenschaltung von Bauelementen in Wirkverbindung mit dem Fixierelement stehen. Dabei wird unter in Wirkverbindung stehend verstanden, dass das Sicherungselement und das Fixierelement direkt oder indirekt zumindest teil- bzw. zeitweise in Abhängigkeit von ihren Positionen zwischen der Verriegelungsposition und Entriegelungsposition in Kontakt stehen oder nicht in Kontakt stehen. Des Weiteren erstreckt sich die radiale Richtung im rechten Winkel von der Haupterstreckungsachse des Steckverbinders unabhängig davon, ob der Steckverbinder selbst rotationssymmetrisch ausgebildet ist oder nicht.

Gemäß einer Ausführungsform ist in der Verriegelungsposition das Fixierelement um eine erste Weglänge zumindest in radialer Richtung beweglich, und durch Verlagern des Sicherungselements ist das Fixierelement aus der Verriegelungsposition in die Entriegelungsposition in radialer Richtung um eine zweite Weglänge verlagerbar, wobei die zweite Weglänge größer als die erste Weglänge ist. So wird sichergestellt, dass in der Entriegelungsposition die Fixierelemente einen größeren Abstand von Gegenfixierelementen als in der Verrieglungsposition aufweisen, so dass ein sicheres Trennen des ersten Verbinders von dem zweiten Verbinder gewährleistet ist.

Gemäß einer weiteren Ausführungsform weist das Fixierelement einen Rasthaken und das Gegenfixierelement einen Gegenrasthaken zum Zusammenwirken mit dem Rasthaken zum Bilden einer Rastverbindung auf. So kann eine Verbindung des ersten Verbinders mit dem zweiten Verbinder auch beim Auftreten von hohen Zugkräften, z.B. oberhalb von 22 bis 68 N, aufrechterhalten werden. Anstelle einer Rastverbindung können das Fixierelement und das Gegenfixierelement auch zum Bilden einer Klemmverbindung oder zum Bilden anderer kraft- und/oder formschlüssiger Verbindungen ausgebildet sein.

Gemäß einer weiteren Ausführungsform sind ein erster Einführbereich und ein zweiter Einführbereich vorgesehen, wobei der erste Einführbereich, z.B. eine Buchsen-Einlaufschräge, durch Zusammenwirken mit dem zweiten Einführbereich die Bewegung des Fixierelements in radialer Richtung bewirkt. Der erste Einführbereich und der zweite Einführbereich bewirken also beim Zusammenfügen des ersten Verbinders mit dem zweiten Verbinder, dass das Fixierelement, z.B. der Rasthaken, ausgelenkt wird und so mit dem z.B. als Gegenrasthaken ausgebildeten Gegenfixierelement in Eingriff treten kann. So kann der Steckverbinder einen besonders einfachen Aufbau aufweisen.

Gemäß einer weiteren Ausführungsform ist der zweite Einführbereich dem Stecker zugeordnet, und der erste Einführbereich ist der Buchse zugeordnet. So wird zugleich beim Einführen des Steckers in die Buchse eine Vorzentrierung des Steckers bewirkt.

Gemäß einer weiteren Ausführungsform sind das Sicherungselement und/oder das Fixierelement aus einem elektrisch leitfähigen Material gefertigt. Somit kann das Sicherungselement zusätzlich die Funktion einer EMV-Schirmung übemehmen, während das Fixierelement zugleich einen Außenleiterabschnitt z.B. eines Koaxialsteckverbinders bildet. Somit weisen das Sicherungselement und/oder das Fixierelement jeweils eine Doppelfunktion auf.

Gemäß einer weiteren Ausführungsform ist das Sicherungselement durch wenigstens ein Schirmkontaktelement mit einem Außenleiter des Steckverbinders elektrisch leitend verbunden. Hierdurch wird erreicht, dass Schirmungsverluste durch geschlitzte Ausbildung des Fixierelements kompensiert werden. So wird die HF-Abschirmung verbessert.

Gemäß einer weiteren Ausführungsform ist eine mit dem Sicherungselement zumindest teilweise in Wirkverbindung stehende Auslaufschräge vorgesehen, die durch Zusammenwirken mit einer Auslauf-Kontaktfläche die Bewegung des Fixierelements in Richtung der dritten, insbesondere radialen, Richtung bewirkt. Die Auslaufschräge bewirkt also beim Verlagern des Sicherungselements, dass das Fixierelement, z.B. der Rasthaken, ausgelenkt und außer Eingriff mit dem z.B. als Gegenrasthaken ausgebildeten Gegenfixierelement gebracht wird.

Gemäß einer weiteren Ausführungsform sind die Auslaufschräge und die Auslauf-Kontaktfläche dem ersten Verbinder zugeordnet. Somit ist die Entriegelungswirkung des Sicherungselements unabhängig von dem zweiten Verbinder, so dass der erste Verbinder für verschiedene zweiter Verbinder geeignet ist, ohne seine Entriegelungswirkung zu verlieren.

Gemäß einer weiteren Ausführungsform ist die Auslaufschräge an dem Fixierelement angeformt. So kann das Fixierelement einen besonders einfachen einstückigen Aufbau aufweisen. Dabei kann die Auslaufschräge aus dem gleichen Material wie das Fixierelement gefertigt sein, oder die Auslaufschräge und das Fixierelement sind aus unterschiedlichen Materialien gefertigt.

Gemäß einer weiteren Ausführungsform ist die Auslauf-Kontaktfläche an dem Sicherungselement angeordnet. So kann das Sicherungselement einen besonders einfachen einstückigen Aufbau aufweisen. Dabei kann die Auslauf-Kontaktfläche aus dem gleichen Material wie das Sicherungselement gefertigt sein, oder die Auslauf-Kontaktfläche und das Sicherungselement sind aus unterschiedlichen Materialien gefertigt.

Gemäß einer weiteren Ausführungsform ist das Sicherungselement unlösbar mit einem Stecker-Grundkörper des ersten Verbinders verbunden. Z.B. kann das Sicherungselement in einer Führung des Stecker-Grundkörpers unverlierbar zwischen der Verriegelungs- und Entriegelungsposition gehalten sein. So kann das Sicherungselement während des Bildens einer Verbindung durch eine Fügebewegung verbunden werden, ohne dass das Sicherungselement verloren gehen kann oder vorher montiert werden muss.

Gemäß einer weiteren Ausführungsform umfasst das Sicherungselement eine Sicherungshülse. So kann das Sicherungselement einen besonders einfachen einstückigen und materialeinheitlichen Aufbau mit z.B. radial gleichmäßig beabstandet angeordneten Kontaktzungen aufweisen, die durch Materialeinschnitte in einen Zylinder gebildet sind und z.B. an ihren freien Enden jeweils mit Rasthaken versehen sind.

Ferner gehört ein Satellit mit einem derartigen Steckverbinder zur Erfindung. Dabei wird unter einem Satelliten ein künstlicher Satellit verstanden, der einen Himmelskörper - einen Planeten wie die Erde oder den Mond - auf einer elliptischen oder kreisförmigen Umlaufbahn zur Erfüllung wissenschaftlicher, kommerzieller oder militärischer Zwecke umkreist.

Die Erfindung wird im Folgenden anhand der Zeichnung näher erläutert. Diese zeigt in
- Fig. 1: eine schematische Schnittdarstellung durch einen Steckverbinder, bestehend aus einem ersten Verbinder und einem zweiten Verbinder, gemäß einem Ausführungsbeispiel der Erfindung im unverbundenen Zustand,
- Fig. 2: eine perspektivische Schnittdarstellung des in Fig. 1 dargestellten ersten Verbinders,
- Fig. 3: einen ersten Schritt der Montage des in Fig. 1 dargestellten Steckerbinders,
- Fig. 4: einen zweiten Schritt der Montage des in Fig. 1 dargestellten Steckerbinders,
- Fig. 5: einen dritten Schritt der Montage des in Fig. 1 dargestellten Steckerbinders,
- Fig. 6: einen vierten Schritt der Montage des in Fig. 1 dargestellten Steckerbinders,
- Fig. 7: einen fünften und letzten Schritt der Montage des in Fig. 1 dargestellten Steckerbinders, und
- Fig. 8: die Entriegelung zur Demontage des in Fig. 1 dargestellten Steckerbinders.

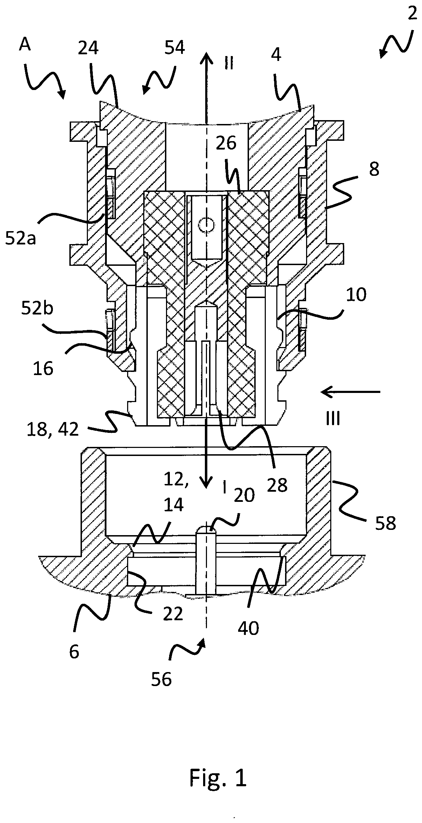

Es wird zunächst auf die Fig. 1 Bezug genommen.

Dargestellt ist ein Steckverbinder 2 zum gegenseitigen elektrischen Verbinden von zwei Bauteilen, wie z.B. Platinen und/oder Leitungen z.B. eines Satelliten. Der Steckverbinder kann aber auch Platinen und/oder Leitungen anderer Geräte elektrisch leitend miteinander verbinden.

Der Steckverbinder 2 im vorliegenden Ausführungsbeispiel ist zum Übertragen von elektrischen Signalen, wie z.B. von HF-Signalen, oder zum Übertragen von Versorgungspannungen ausgebildet. Alternativ kann der Steckverbinder 2 auch dazu ausgebildet sein, optische Signale, wie z.B. Licht oder Laserlicht, zu übertragen und dann optische Bauelemente und/oder Lichtwellenleiter miteinander zu verbinden.

Der Steckverbinder 2 weist einen männlichen Teil und einen weiblichen Teil auf, wobei im Folgenden unabhängig von dem Verbindungspartner des männlichen Teils und des weiblichen Teils, z.B. Platinen und/oder Leitungen, der männliche Teil als erster Verbinder 4 und der weibliche Teil als zweiter Verbinder 6 bezeichnet wird. Im vorliegenden Ausführungsbeispiel ist der erste Verbinder 4 als Stecker und der zweite Verbinder 6 als Buchse ausgebildet.

Eine elektrisch leitende oder optische Signale übertragende Verbindung kann mit dem Steckverbinder 2 gebildet werden, in dem der erster Verbinder 4 entlang seiner Haupterstreckungsachse in einer ersten, im vorliegenden Ausführungsbeispiel axialen Richtung I auf den zweiten Verbinder 6 zubewegt und mit diesem verbunden wird, wie dies später noch detailliert erläutert wird.

Im vorliegenden Ausführungsbeispiel ist der Steckverbinder 2 als Koaxialsteckverbinder mit einer länglichen Grundform in einer Haupterstreckungsachse ausgebildet und weist daher einen Innenleiter 56 und einen Außenleiter 54 auf. Abweichend vom vorliegenden Ausführungsbeispiel kann der Steckverbinder 2 auch eine beliebige andere Steckkontaktkonfiguration wie z.B. mit in einer Reihe oder rechteckförmig angeordneten Kontakten aufweisen.

Der erste Verbinder 4 weist im vorliegenden Ausführungsbeispiel einen Stecker-Grundkörper 24, einen Isolierkörper 26, ein Sicherungselement 8 und ein Fixierelement 10 sowie eine Innenleiter-Steckerbuchse 28 auf.

Ferner weist im vorliegenden Ausführungsbeispiel der zweite Verbinder 6 neben einem Anschlussstift 20 zum Verbinden mit der Innenleiter-Steckerbuchse 28 ein Gegenfixierelement 12 zum Zusammenwirken mit dem Fixierelement 10 auf, um den ersten Verbinder 4 an dem zweiter Verbinder 6 zu fixieren. Im vorliegenden Ausführungsbeispiel sind das Fixierelement 10 und das Gegenfixierelement 12 zum Bilden einer Rastverbindung ausgebildet. Alternativ können das Fixierelement 10 und das Gegenfixierelement 12 auch zum Bilden einer Klemmverbindung ausgebildet sein.

Schließlich weist der Steckverbinder 2 eine HF-Abschirmung auf, die im vorliegenden Ausführungsbeispiel ein erstes Schirmkontaktelement 52a und ein zweites Schirmkontaktelement 52b zur HF-Abschirmung umfasst. Das erste Schirmkontaktelement 52a ist zwischen dem Stecker-Grundkörper 24 und dem Sicherungselement 8 angeordnet und erstreckt sich ringförmig um den Grundkörper 24, während das zweite Schirmkontaktelement 52b zwischen einem Buchsen-Grundkörper 58 des zweiten Verbinders 6 und dem Sicherungselement 8 angeordnet ist und sich ringförmig um das Sicherungselement 8 erstreckt. Da der Stecker-Grundkörper 24 und der Buchsen-Grundkörper 58 jeweils Abschnitte des Außenleiters 54 bilden sind das erste Schirmkontaktelement 52a und das zweite Schirmkontaktelement 52b elektrisch leitend mit dem Außenleiter 54 verbunden.

Der Innenleiter 56 des Steckverbinders 2 wird durch den Anschlussstift 20 des zweiten Verbinder 6 und die Innenleiter-Steckerbuchse 28 des ersten Verbinders 4 gebildet, während der Außenleiter 54 durch einen Außenkontaktabschnitt 18 des Fixierelements 10 des ersten Verbinders 4 und den Gegenkontaktabschnitt 22 des zweiten Verbinders 6 gebildet wird.

Zwischen dem Fixierelement 10 und der Innenleiter-Steckerbuchse 28 ist der Isolierkörper 26 angeordnet, der den Innenleiter 56 und den Außenleiter 54 elektrisch voneinander isoliert.

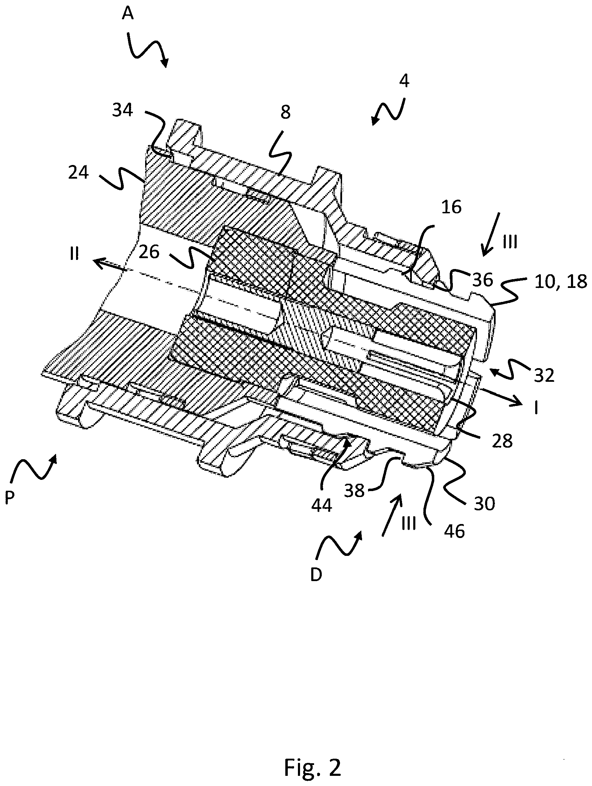

Es werden nun weitere Details, insbesondere des Sicherungselements 8 und des Fixierelements 10, unter zusätzlicher Bezugnahme auf die Fig. 2 erläutert.

Das Sicherungselement 8 ist im vorliegenden Ausführungsbeispiel im Unterschied zum Isolierkörper 26 aus einem elektrisch leitfähigen Material gefertigt und als Sicherungshülse ausgebildet. Das Sicherungselement 8 ist ferner im vorliegenden Ausführungsbeispiel unverlierbar in einer Führung des Stecker-Grundkörpers 24 zwischen einer Verrieglungsposition A und einer Entriegelungsposition B entlang der Haupterstreckungsachse in Richtung der ersten Richtung I und der zur ersten Richtung I entgegengesetzten zweiten Richtung II verlagerbar. Dabei begrenzen ein erster Anschlag 34 und ein zweiter Anschlag 36 diese Bewegung.

Die Verriegelungsposition A befindet sich im vorliegenden Ausführungsbeispiel am vorderen Ende D bzw. dem dem zweiten Verbinder 6 zugewandten Ende und die Entriegelungsposition B am hinteren Ende P bzw. dem dem zweiten Verbinder 6 abgewandten Ende des ersten Verbinders 4. In der Fig. 2 befindet sich das Sicherungselement 8 in der Verriegelungsposition A am vorderen Ende D.

Das Fixierelement 10 ist im vorliegenden Ausführungsbeispiel ebenfalls aus einem elektrisch leitfähigen Material gefertigt und weist durch eine Mehrzahl von Schlitzen 32 gebildete Kontaktzungen 30 auf. Das Fixierelement 10 ist im vorliegenden Ausführungsbeispiel hülsenförmig ausgebildet, wobei die Mehrzahl von Schlitzen 32 gleichmäßig beabstandet in Umfangsrichtung des Fixierelements 10 geordnet ist.

Das Fixierelement 10 weist im vorliegenden Ausführungsbeispiel zum Bilden der Rastverbindung mit dem Gegenfixierelement 12 eine Mehrzahl von Rasthaken 38 auf, die zum Zusammenwirken mit Gegenrasthaken 40 des zweiten Verbinders 6 (siehe Fig. 1) ausgebildet sind. Eine Auslenkung der Kontaktzungen 30 in einer dritten, im vorliegenden Ausführungsbeispiel radialen Richtung III zum Bilden der Rastverbindung durch Eingriff der Rasthaken 38 mit den Gegenrasthaken 40 wird dabei durch den als Einlauf-Kontaktfläche ausgebildeten ersten Einführbereich 42 und den als Buchsen-Einlaufschräge ausgebildeten zweiten Einführbereich 14 (siehe Fig. 1) gewährleistet, die während einer Fügebewegung in der ersten Richtung I aufeinander treffen. Hierzu sind der erste Einführbereich 42 und der zweite Einführbereich 14 im vorliegenden Ausführungsbeispiel jeweils rampenförmig ausgebildet.

Die dritte Richtung III weist im vorliegenden Ausführungsbeispiel einen Winkel von im Wesentlichen 90° zur ersten Richtung I auf. Dabei wird unter dem Begriff "im Wesentlichen" ein Bereich innerhalb üblicher Fertigungstoleranzen verstanden. Ferner erstrecken sich im vorliegenden Ausführungsbeispiel die erste Richtung I und die zweite Richtung II entlang der Haupterstreckungsachse des Steckverbinders 2, während die dritte Richtung III sich aufgrund des im Wesentlichen rotationssymmetrischen Aufbaus des Steckverbinders 2 als Koaxialsteckverbinder radial einwärts erstreckt.

Das Fixierelement 10 weist ferner im vorliegenden Ausführungsbeispiel eine Auslaufschräge 16 auf. Die Auslaufschräge 16 tritt - wie später noch detailliert erläutert wird - beim Verlagern des Sicherungselements 8 aus der Verrieglungsposition A in die Entriegelungsposition B durch eine Bewegung in der zweiten Richtung II entgegengesetzt zur ersten Richtung I mit einer Auslauf-Kontaktfläche 44 des Sicherungselements 8 in Kontakt und bewirkt aufgrund seiner rampenförmigen Ausbildung eine Auslenkung der Kontaktzungen 30 in Richtung der dritten, radialen Richtung III.

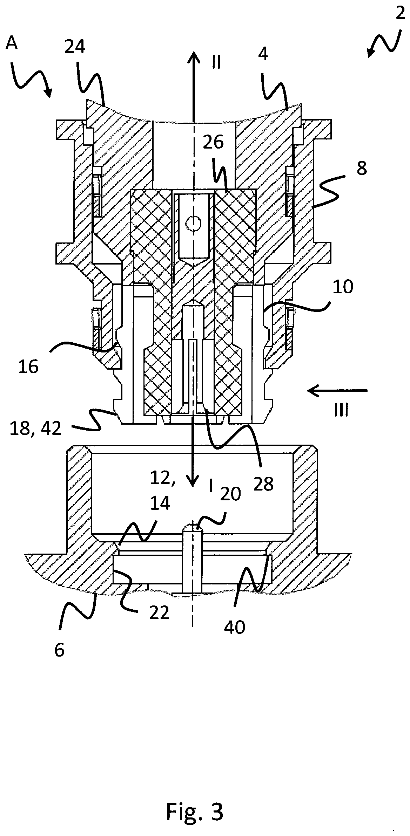

Es wird nun der Montagevorgang zum Verbinden des ersten Verbinders 4 mit dem zweiten Verbinder 6 unter zusätzlicher Bezugnahme auf die Fig. 3 bis 8 erläutert.

Fig. 3 zeigt einen ersten Schritt, bei dem der erste Verbinder 4 und der zweite Verbinder 6 im getrennten Zustand sind, wobei durch eine Fügebewegung in der ersten Richtung I der erster Verbinder 4 an den zweiten Verbinder 6 angenähert wird. Dabei kann das Sicherungselement 8 als Griffelement dienen. Hierbei befindet sich das Sicherungselement 8 in der Verriegelungsposition A. In der Verriegelungsposition A befindet sich das Sicherungselement 8 am zweiten Anschlag 36. Hierdurch wird während der Fügebewegung eine Relativbewegung des Sicherungselements 8 in Bezug zum ersten Verbinder 4 unterbunden, so dass das Sicherungselement 8 als Griffelement während einer Einhandmontage dient.

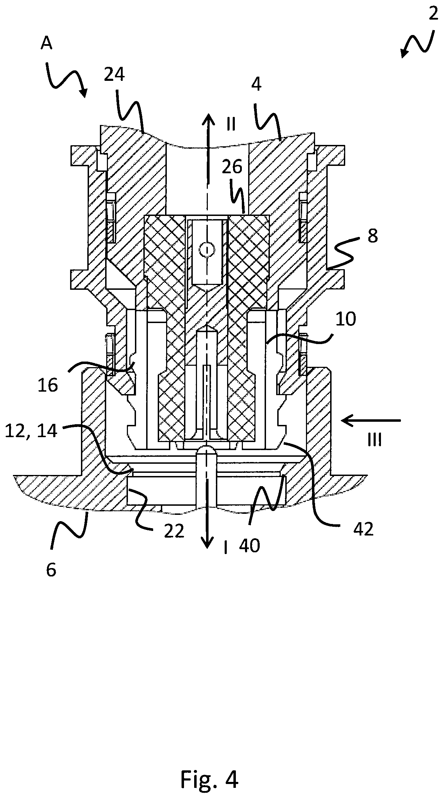

Fig. 4 zeigt einen zweiten Schritt, bei dem der erste Verbinder 4 in den zweiten Verbinder 6 durch die Fügebewegung in der ersten Richtung I soweit eingeführt ist, dass ein erster Einführbereich 42 des Fixierelements 8 des ersten Verbinders 4 in den zweiten Einführbereich 14 des zweiten Verbinder 6 tritt und so eine Vorzentrierung des ersten Verbinders 4 in dem zweiten Verbinder 6 bewirkt.

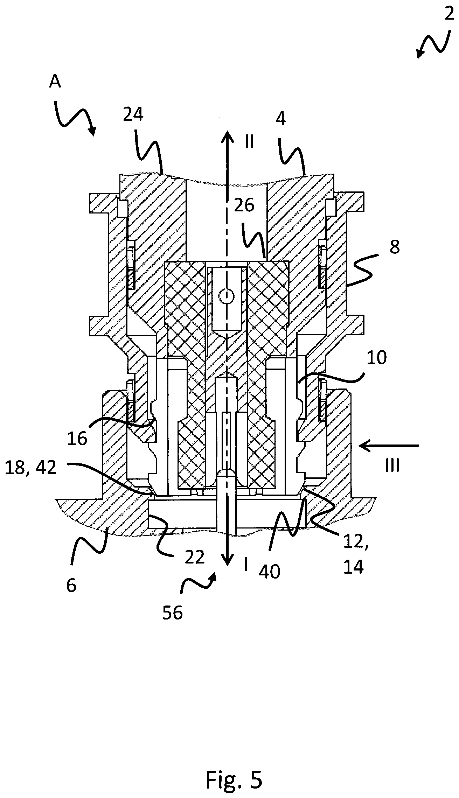

Fig. 5 zeigt einen dritten Schritt, bei dem durch Fortsetzen der Fügebewegung in der ersten Richtung I die Stecker-Einlaufschräge 46 (siehe Fig. 2) des Fixierelements 10 auf den zweiten Einführbereich 14 trifft. Zugleich ist der Anschlussstift 20 (siehe Fig. 1) in die Innenleiter-Steckerbuchse 28 (siehe Fig. 1) eingetreten, so dass der Innenleiter 56 elektrisch verbunden ist.

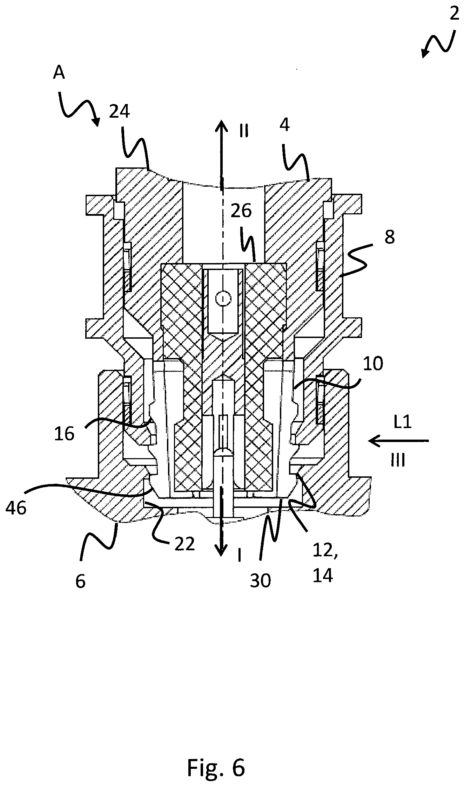

Fig. 6 zeigt einen vierten Schritt, bei dem durch Fortsetzen der Fügebewegung in der ersten Richtung I die Kontaktzungen 30 durch die rampenförmige Ausbildung der Stecker-Einlaufschräge 46 und des zweiten Einführbereichs 14 um eine erste Weglänge L1 in Richtung der dritten Richtung III ausgelenkt sind.

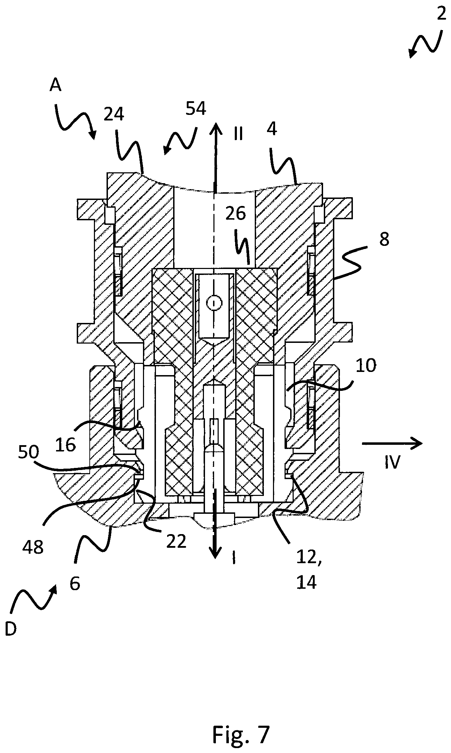

Fig. 7 zeigt einen fünften Schritt, bei dem durch Fortsetzen der Fügebewegung in der ersten Richtung I der erste Verbinder 4 schließlich seine Endposition erreicht, bei dem das vordere Ende D des ersten Verbinders 4 einen Boden des zweiten Verbinders 6 kontaktiert und sich aufgrund der federnden Ausbildung in die zur dritten Richtung III entgegengesetzten vierten Richtung IV zurückbewegt hat. Dadurch wird nun der Kontakt des Außenleiters 54 in dem Gegenkontaktabschnitt 22 gebildet.

Nun verhindert ein Aufeinandertreffen einer Kontaktfläche 48 des Rasthakens 38 (siehe Fig. 2) mit einer Gegenkontaktfläche 50 des Gegenrasthakens 40 (siehe Fig. 1), dass der erste Verbinder 4 durch eine Bewegung in Richtung der zweiten Richtung II, also entgegengesetzt zur Fügebewegung, wieder getrennt werden kann. Im vorliegenden Ausführungsbeispiel sind die Rasthaken 38 und die Gegenrasthaken 40 derart ausgebildet, dass eine Zugkraft in Richtung der zweiten Richtung II in Höhe von beispielsweise 500 N erforderlich ist, um den ersten Verbinder 4 von dem zweiten Verbinder 6 zu trennen.

Bei den Schritten eins bis fünf verbleibt das Sicherungselement 8 in der Verrieglungsposition A und behindert die Auslenkbewegungen der Kontaktzungen 30 (siehe Fig. 2) nicht, d.h.es stellt ausreichend Raum für deren Auslenkbewegungen bereit.

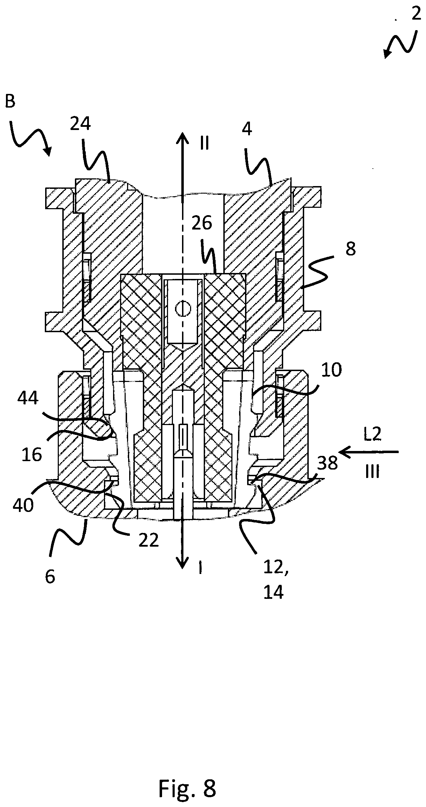

Fig. 8 zeigt einen weiteren Schritt, bei dem das Sicherungselement 8 von der Verriegelungsposition A durch eine Bewegung in der zweiten Richtung II in die Entriegelungsposition B verlagert wurde.

Durch diese Verlagerung ist die Auslauf-Kontaktfläche 44 mit der Auslaufschräge 16 in Kontakt getreten, wobei durch die rampenförmige Ausbildung der Auslaufschräge 16 die Kontaktzungen 30 (siehe Fig. 2) um eine zweite Weglänge L2 in Richtung der dritten Richtung III ausgelenkt werden. Dabei ist die zweite Weglänge L2 größer als die erste Weglänge L1, so dass die Rasthaken 38 und die Gegenrasthaken 40 nicht mehr in Kontakt miteinander stehen bzw. außer Eingriff sind. Nun kann der erste Verbinder 4 problemlos mit geringem Kraftaufwand von dem zweiten Verbinder 6 getrennt werden.
Somit wird ein Steckverbinder 2 bereitgestellt, bei dem es nicht erforderlich ist, vor dem Durchführen einer Fügebewegung zum Verbinden des ersten Verbinders 4 mit dem zweiten Verbinder 6 zuerst das Sicherungselement 8 in eine Richtung entgegen der Fügebewegung in der ersten Richtung I zu bewegen, sondern der erste Verbinder 4 kann sofort in einem Schritt mit dem zweiten Verbinder 6 verbunden werden. Dies vereinfacht das Herstellen einer Verbindung mit dem Steckverbinder 2 erheblich und erlaubt eine Einhandmontage. Zugleich hat der eine Lösefunktion aufweisende Steckverbinder 2 Fixierelemente 10, die durch eine Rastverbindung des ersten Verbinders 4 mit dem zweiten Verbinder 6 auch beim Auftreten von hohen Zugkräften z.B. oberhalb von zwischen 22 bis 68 N, wie z.B. 500 N, die Verbindung zwischen dem ersten Verbinder 4 und dem zweiten Verbinder 6 aufrechterhalten.

## Patentansprüche

1. Steckverbinder (2), mit einem ersten Verbinder (4) und einem zweiten Verbinder (6),
wobei der erste Verbinder (4) und der zweite Verbinder (6) durch eine Fügebewegung entlang einer Haupterstreckungsachse des Steckverbinders (2) miteinander verbindbar sind,
wobei ein dem ersten Verbinder (4) zugeordnetes Sicherungselement (8) zwischen einer Verriegelungsposition (A) und einer Entriegelungsposition (B) entlang der Haupterstreckungsachse verlagerbar ist,
wobei ein Fixierelement (10) des ersten Verbinders (4) zum Fixieren des ersten Verbinders (4) an dem zweiten Verbinder (6) durch Zusammenwirken mit einem Gegenfixierelement (12) des zweiten Verbinders (6) vorgesehen ist, um eine Lösebewegung des ersten Verbinders (4) und des zweiten Verbinders (6) relativ zueinander zu blockieren,
wobei das Fixierelement (10) in einer radialen Richtung (III, IV) beweglich ist, wobei in der Verriegelungsposition (A) das Sicherungselement (8) dem Fixierelement (10) eine Bewegung in radialer Richtung (III) nach innen erlaubend ausgebildet ist, um eine Fügebewegung in axialer Richtung (I) zum Verbinden des ersten Verbinders (4) mit dem zweiten Verbinder (6) zu ermöglichen, **dadurch gekennzeichnet, dass** das Sicherungselement (8) direkt oder indirekt in Wirkverbindung mit dem Fixierelement (10) steht, derart, dass ein Verlagern des Sicherungselements (8) von der Verriegelungsposition (A) in die Entriegelungsposition (B) ein Verlagern des Fixierelements (10) in radialer Richtung (III) nach innen bewirkt, und wobei
durch Verlagern des Sicherungselements (8) aus der Verriegelungsposition (A) in die Entriegelungsposition (B) das Fixierelement (10) von dem Gegenfixierelement (12) durch eine Bewegung in radialer Richtung (III) nach innen lösbar ist, um die Lösebewegung in axialer Richtung (II) zum Trennen des ersten Verbinders (4) von dem zweiten Verbinder (6) zu ermöglichen.

2. Steckverbinder (2) nach Anspruch 1, **dadurch gekennzeichnet, dass** in der Verriegelungsposition (A) das Fixierelement (10) um eine erste Weglänge (L1) zumindest in radialer Richtung (III) beweglich ist, und durch Verlagern des Sicherungselements (8) aus der Verriegelungsposition (A) in die Entriegelungsposition (B) das Fixierelement (10) in radialer Richtung (III) um eine zweite Weglänge (L2) verlagerbar ist, wobei die zweite Weglänge (L2) größer als die erste Weglänge (L1) ist.

3. Steckverbinder (2) nach Anspruch 1 oder 2, **dadurch gekennzeichnet, dass** das Fixierelement (10) einen Rasthaken (38) und das Gegenfixierelement (12) einen Gegenrasthaken (40) zum Zusammenwirken mit dem Rasthaken (38) zum Bilden einer Rastverbindung aufweist.

4. Steckverbinder (2) nach mindestens einem der vorhergehenden Ansprüche, **dadurch gekennzeichnet, dass** ein erster Einführbereich (42) und ein zweiter Einführbereich (14) vorgesehen sind, wobei der zweite Einführbereich (14) derart ausgebildet ist, dass dieser durch Zusammenwirken mit dem ersten Einführbereich (42) die Bewegung des Fixierelements (10) in radialer Richtung (III) bewirkt, wobei insbesondere der erste Einführbereich (42) dem ersten Verbinder (4) und der zweite Einführbereich (14) dem zweiten Verbinder (6) zugeordnet ist.

5. Steckverbinder (2) nach mindestens einem der vorhergehenden Ansprüche, **dadurch gekennzeichnet, dass** das Sicherungselement (8) und/oder das Fixierelement (10) aus einem elektrisch leitfähigen Material gefertigt ist.

6. Steckverbinder (2) nach Anspruch 5, **dadurch gekennzeichnet, dass** das Sicherungselement (8) durch wenigstens ein Schirmkontaktelement (52a, 52b) mit einem Außenleiter (54) des Steckverbinders (2) elektrisch leitend verbunden ist.

7. Steckverbinder (2) nach mindestens einem der vorhergehenden Ansprüche, **dadurch gekennzeichnet, dass** eine mit dem Sicherungselement (8) zumindest teilweise in Wirkverbindung stehende Auslaufschräge (16) vorgesehen ist, die durch Zusammenwirken mit einer Auslauf-Kontaktfläche (44) die Bewegung des Fixierelements (10) in Richtung der dritten Richtung (III) bewirkt.

8. Steckverbinder (2) nach Anspruch 7, **dadurch gekennzeichnet, dass** die Auslaufschräge (16) und die Auslauf-Kontaktfläche (44) dem ersten Verbinder (4) zugeordnet sind.

9. Steckverbinder (2) nach Anspruch 8, **dadurch gekennzeichnet, dass** die Auslaufschräge (16) an dem Fixierelement (10) angeformt ist.

10. Steckverbinder (2) nach Anspruch 8 oder 9, **dadurch gekennzeichnet, dass** die Auslauf-Kontaktfläche (44) an dem Sicherungselement (8) angeformt ist.

11. Steckverbinder (2) nach mindestens einem der vorhergehenden Ansprüche, **dadurch gekennzeichnet, dass** das Sicherungselement (8) unlösbar mit einem Stecker-Grundkörper (24) des ersten Verbinders (4) verbunden ist.

12. Steckverbinder (2) nach mindestens einem der vorhergehenden Ansprüche, **dadurch gekennzeichnet, dass** das Sicherungselement (8) eine Sicherungshülse umfasst.

13. Satellit, wenigstens aufweisend einen Steckverbinder (2) nach einem der Ansprüche 1 bis 12.

## Claims

1. Plug connector (2) comprising a first connector (4) and a second connector (6),
wherein the first connector (4) and the second connector (6) can be connected with each other through a joining movement along a main axis of extension of the plug connector (2),
wherein a securing element (8) which is associated with the first connector (4) can be displaced along the main axis of extension between a locking position (A) and an unlocking position (B),
wherein a fixing element (10) of the first connector (4) is provided in order to fix the first connector (4) to the second connector (6) through interaction with a counter-fixing element (12) of the second connector (6) in order to block a disconnecting movement of the first connector (4) and the second connector (6) relative to each other,
wherein the fixing element (10) is moveable in a radial direction (III, IV),
wherein in the locking position (A) the securing element (8) is designed to permit the fixing element (10) a movement in a radial inwards direction (III) in order to make possible a joining movement in axial direction (I) in order to connect the first connector (4) with the second connector (6),
**characterised in that** the securing element (8) is, directly or indirectly, in operative connection with the fixing element (10), such that a displacement of the securing element (8) from the locking position (A) into the unlocking position (B) causes a displacement of the fixing element (10) in radial inwards direction (III), and wherein,
by displacing the securing element (8) from the locking position (A) into the unlocking position (B), the fixing element (10) can be released from the counter-fixing element (12) through a movement in radial inwards direction (III) in order to permit the disconnecting movement in axial direction (II) in order to separate the first connector (4) from the second connector (6).

2. Plug connector (2) according to claim 1, **characterised in that** in the locking position (A) the fixing element (10) can be moved by a first travel length (L1), at least in radial direction (III), and by displacing the securing element (8) from the locking position (A) into the unlocking position (B) the fixing element (10) can be displaced in radial direction (III) by a second travel length (L2), wherein the second travel length (L2) is greater than the first travel length (L1).

3. Plug connector (2) according to claim 1 or 2, **characterised in that** the fixing element (10) has a snap-in hook (38) and the counter-fixing element (12) has a counter-snap-in hook (40) designed to interact with the snap-in hook (38) in order to form a snap-locking connection.

4. Plug connector (2) according to at least one of the preceding claims, **characterised in that** a first insertion region (42) and a second insertion region (14) are provided, wherein the second insertion region (14) is designed such that, through interaction with the first insertion region (42), this causes the movement of the fixing element (10) in radial direction (III), wherein, in particular,
the first insertion region (42) is associated with the first connector (4) and the second insertion region (14) is associated with the second connector (6).

5. Plug connector (2) according to at least one of the preceding claims, **characterised in that** the securing element (8) and/or the fixing element (10) is manufactured from an electrically conductive material.

6. Plug connector (2) according to claim 5, **characterised in that** the securing element (8) is connected with an outer conductor (54) of the plug connector (2) in an electrically conductive manner via at least one shield contact element (52a, 52b).

7. Plug connector (2) according to at least one of the preceding claims, **characterised in that** a withdrawal bevel (16) which is at least partially in operative connection with the securing element (8) is provided which, through interaction with a withdrawal contact surface (44), causes the movement of the fixing element (10) in the direction of the third direction (III).

8. Plug connector (2) according to claim 7, **characterised in that** the withdrawal bevel (16) and the withdrawal contact surface (44) are associated with the first connector (4).

9. Plug connector (2) according to claim 8, **characterised in that** the withdrawal bevel (16) is formed on the fixing element (10).

10. Plug connector (2) according to claim 8 or 9, **characterised in that** the withdrawal contact surface (44) is formed on the securing element (8).

11. Plug connector (2) according to at least one of the preceding claims, **characterised in that** the securing element (8) is connected undetachably with a main plug body (24) of the first connector (4).

12. Plug connector (2) according to at least one of the preceding claims, **characterised in that** the securing element (8) comprises a securing sleeve.

13. Satellite, at least equipped with a plug connector (2) according to one of the claims 1 to 12.

## Revendications

1. Connecteur enfichable (2), comprenant un premier connecteur (4) et un second connecteur (6),
dans lequel
le premier connecteur (4) et le second connecteur (6) peuvent être reliés l'un à l'autre par un mouvement de jonction le long d'un axe d'extension principale du connecteur enfichable (2),
un élément de blocage (8) associé au premier connecteur (4) peut être déplacé entre une position de verrouillage (A) et une position de déverrouillage (B) le long de l'axe d'extension principale,
il est prévu un élément de fixation (10) du premier connecteur (4) pour fixer le premier connecteur (4) au second connecteur (6) par coopération avec un élément de fixation antagoniste (12) du second connecteur (6), afin de bloquer un mouvement de libération du premier connecteur (4) et du second connecteur (6) l'un de l'autre,
l'élément de fixation (10) est mobile dans une direction radiale (III, IV),
dans la position de verrouillage (A), l'élément de blocage (8) est réalisé de manière à permettre à l'élément de fixation (10) de se déplacer en direction radiale (III) vers l'intérieur, afin de permettre un mouvement de jonction en direction axiale (I) en vue de relier le premier connecteur (4) au second connecteur (6),
**caractérisé en ce que**
l'élément de blocage (8) est en liaison active directe ou indirecte avec l'élément de fixation (10), de telle sorte qu'un déplacement de l'élément de blocage (8) depuis la position de verrouillage (A) jusque dans la position de déverrouillage (B) provoque un déplacement de l'élément de fixation (10) en direction radiale (III) vers l'intérieur, et
par le déplacement de l'élément de blocage (8) depuis la position de verrouillage (A) jusque dans la position de déverrouillage (B), l'élément de fixation (10) peut être libéré de l'élément de fixation antagoniste (12) par un mouvement en direction radiale (III) vers l'intérieur, afin de permettre le mouvement de libération en direction axiale (II) pour séparer le premier connecteur (4) du second connecteur (6).

2. Connecteur enfichable (2) selon la revendication 1,
**caractérisé en ce que** dans la position de verrouillage (A), l'élément de fixation (10) est mobile d'une première longueur de trajet (L1) au moins dans la direction radiale (III), et par déplacement de l'élément de blocage (8) depuis la position de verrouillage (A) jusque dans la position de déverrouillage (B), l'élément de fixation (10) est mobile dans la direction radiale (III) d'une seconde longueur de trajet (L2), la seconde longueur de trajet (L2) étant supérieure à la première longueur de trajet (L1).

3. Connecteur enfichable (2) selon la revendication 1 ou 2,
**caractérisé en ce que** l'élément de fixation (10) présente un crochet d'enclenchement (38), et l'élément de fixation antagoniste (12) présente un crochet d'enclenchement antagoniste (40) pour coopérer avec le crochet d'enclenchement (38) afin de former une connexion par enclenchement.

4. Connecteur enfichable (2) selon l'une au moins des revendications précédentes,
**caractérisé en ce qu'**il est prévu une première zone d'insertion (42) et une seconde zone d'insertion (14), la seconde zone d'insertion (14) étant réalisée de manière à provoquer le mouvement de l'élément de fixation (10) dans la direction radiale (III) par coopération avec la première zone d'insertion (42), en particulier la première zone d'insertion (42) étant associée au premier connecteur (4) et la seconde zone d'insertion (14) étant associée au second connecteur (6).

5. Connecteur enfichable (2) selon l'une au moins des revendications précédentes,
**caractérisé en ce que** l'élément de blocage (8) et/ou l'élément de fixation (10) est constitué d'un matériau électriquement conducteur.

6. Connecteur enfichable (2) selon la revendication 5,
**caractérisé en ce que** l'élément de blocage (8) est relié de manière électriquement conductrice à un conducteur extérieur (54) du connecteur enfichable (2) par au moins un élément de contact de blindage (52a, 52b).

7. Connecteur enfichable (2) selon l'une au moins des revendications précédentes,
**caractérisé en ce qu'**il est prévu une rampe de sortie (16) qui est au moins partiellement en liaison active avec l'élément de blocage (8) et qui, en coopérant avec une surface de contact de sortie (44), provoque le déplacement de l'élément de fixation (10) dans le sens de la troisième direction (III).

8. Connecteur enfichable (2) selon la revendication 7,
**caractérisé en ce que** la rampe de sortie (16) et la surface de contact de sortie (44) sont associées au premier connecteur (4).

9. Connecteur enfichable (2) selon la revendication 8,
**caractérisé en ce que** la rampe de sortie (16) est conformée sur l'élément de fixation (10).

10. Connecteur enfichable (2) selon la revendication 8 ou 9,
**caractérisé en ce que** la surface de contact de sortie (44) est conformée sur l'élément de blocage (8).

11. Connecteur enfichable (2) selon l'une au moins des revendications précédentes,
**caractérisé en ce que** l'élément de blocage (8) est relié de manière non détachable à un corps de base de fiche (24) du premier connecteur (4).

12. Connecteur enfichable (2) selon l'une au moins des revendications précédentes,
**caractérisé en ce que** l'élément de blocage (8) comprend une douille de blocage.

13. Satellite comprenant au moins un connecteur enfichable (2) selon l'une des revendications 1 à 12.
